(19) Europäisches Patentamt
European Patent Office
Office européen des brevets

(11) **EP 2 847 023 B1**

(12) **EUROPÄISCHE PATENTSCHRIFT**

(45) Veröffentlichungstag und Bekanntmachung des Hinweises auf die Patenterteilung:
**13.04.2016 Patentblatt 2016/15**

(51) Int Cl.:
***B60L 3/00*** *(2006.01)*      ***B60L 11/18*** *(2006.01)*
***B60L 3/04*** *(2006.01)*

(21) Anmeldenummer: **12743128.6**

(22) Anmeldetag: **26.07.2012**

(86) Internationale Anmeldenummer:
**PCT/EP2012/064686**

(87) Internationale Veröffentlichungsnummer:
**WO 2014/015907 (30.01.2014 Gazette 2014/05)**

(54) **VERFAHREN ZUM SCHUTZ EINES LADEKABELS UND LADEEINRICHTUNG**

METHOD FOR PROTECTING A CHARGING CABLE AND CHARGING DEVICE

PROCÉDÉ DE PROTECTION D'UN CÂBLE DE CHARGE ET DISPOSITIF DE CHARGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.03.2015 Patentblatt 2015/12**

(73) Patentinhaber: **Siemens Aktiengesellschaft 80333 München (DE)**

(72) Erfinder:
• **LÜDE, Thomas 12169 Berlin (DE)**
• **NOLEWAIKA, Martin 91056 Erlangen (DE)**

(56) Entgegenhaltungen:
**WO-A1-2011/120793      DE-A1-102010 043 291**

EP 2 847 023 B1

**Beschreibung**

Die Erfindung betrifft ein Verfahren zum Schutz eines Ladekabels zum Laden einer Fahrbatterie eines elektrisch antreibbaren Fahrzeugs und eine Ladeeinrichtung zum Laden der Fahrbatterie eines solchen Fahrzeugs.

Elektrisch antreibbare Fahrzeuge weisen eine Fahrbatterie (Akkumulator) auf, welche die für den Fahrbetrieb benötigte elektrische Energie zur Verfügung stellt. Entladene Batterien müssen bei Bedarf mittels einer Ladeeinrichtung wieder aufgeladen werden. Dazu werden die Fahrbatterie des elektrisch antreibbaren Fahrzeugs und die Ladeeinrichtung mittels eines Ladekabels elektrisch miteinander verbunden. Entsprechend der Stromtragfähigkeit (Stromleitfähigkeit) gibt es Ladekabel mit unterschiedlichen Leitungsquerschnitten. Beispielsweise gibt es Ladekabel, welche eine Stromtragfähigkeit von 13A aufweisen. Andere Ladekabel weisen eine Stromtragfähigkeit von zum Beispiel 20A, 32A oder 63A auf. Gemäß der Norm IEC 62196-2 werden derartige Ladekabel z.B. mit einem elektrischen Stecker versehen, welche zum Beispiel als ein sogenannter Typ-2-Stecker ausgestaltet ist. Laut dieser Norm IEC 62196-2 weisen diese Stecker auch dann gleiche geometrische Abmessungen auf, wenn sie für Ladekabel mit unterschiedlich großen Stromtragfähigkeiten vorgesehen sind. Daher kann an den geometrischen Abmessungen des Steckers nicht erkannt werden, für welche Stromtragfähigkeit das mit dem Stecker verbundene Ladekabel geeignet ist.

Nach der Norm IEC 61851-1 ist bei diesen Steckern mittels eines Widerstands, der zwischen die Kontakte "Proximity" und "PE" des Steckers geschaltet ist, die Stromtragfähigkeit des Ladekabels angegeben (codiert). Dabei ist ein bestimmter Widerstandswert einer bestimmten Stromtragfähigkeit des Ladekabels zugeordnet. Auch bei Ladekabel-Buchsen ist ein derartiger Widerstand vorhanden.

Ferner ist das Messen einer Temperatur und/oder eines Stromwertes in einem Ladekabel für ein elektrisches Fahrzeug aus DE10 2010 043 291 bekannt.

Der Erfindung liegt die Aufgabe zugrunde, ein Verfahren und eine Einrichtung anzugeben, die einen sicheren und zuverlässigen Schutz des Ladekabels beim Laden ermöglichen.

Diese Aufgabe wird erfindungsgemäß gelöst durch ein Verfahren und eine Ladeeinrichtung nach den unabhängigen Patentansprüchen. Vorteilhafte Ausgestaltungen sind in den abhängigen Patentansprüchen angegeben.

Erfindungsgemäß angegeben wird ein Verfahren zum Schutz eines Ladekabels zum Laden einer Fahrbatterie eines elektrisch antreibbaren Fahrzeugs, wobei bei dem Verfahren

- ein Nennwert der Stromtragfähigkeit des Ladekabels ermittelt wird,
- die Stromstärke des durch das Ladekabel fließenden Stroms (Ladestroms) unter Bildung eines Stromwerts gemessen wird,
- unter Nutzung des Nennwerts der Stromtragfähigkeit und des Stromwerts mindestens ein Erwartungswert für die Temperatur des Ladekabels ermittelt wird,
- die Temperatur des Ladekabels unter Bildung mindestens eines Temperaturwerts gemessen wird,
- der mindestens eine Temperaturwert mit dem mindestens einen Erwartungswert verglichen wird und
- bei Auftreten einer vorbestimmten Abweichung zwischen dem mindestens einen Temperaturwert und dem mindestens einen Erwartungswert das Vorliegen eines Fehler erkannt wird.

Bei diesem Verfahren ist insbesondere vorteilhaft, dass das Vorliegen eines Fehlers erkannt wird, wenn eine vorbestimmte Abweichung zwischen dem mindestens einen Temperaturwert und dem mindestens einen Erwartungswerten auftritt. Damit wird verhindert, dass bei dem Ladekabel unzulässig hohe Temperaturen auftreten, was zu einer Beschädigung des Ladekabels, des Fahrzeugs oder einer an das Ladekabel angeschlossenen Ladeeinrichtung führen könnte. Weiterhin könnten solche unzulässig hohen Temperaturen sogar zu einer Verletzung eines Nutzers führen, welcher das Ladekabel berührt oder sich in der Nähe des Ladekabels aufhält. Derartige Verletzungen oder Beschädigungen werden mit dem Verfahren zuverlässig vermieden.

Das Verfahren kann so ausgestaltet sein, dass die Temperaturwerte mit den Erwartungswerten verglichen werden, indem

- die zeitliche Änderung der Temperaturwerte ermittelt wird,
- die zeitliche Änderung der Erwartungswerte ermittelt wird, und
- die Abweichung zwischen der zeitlichen Änderung der Temperaturwerte und der zeitlichen Änderung der Erwartungswerte ermittelt wird.

Dabei wird das Vorliegen des Fehlers erkannt, wenn die Abweichung einen vorbestimmten Grenzwert überschreitet.

Damit ergibt sich ein Verfahren zum Schutz eines Ladekabels zum Laden einer Fahrbatterie eines elektrisch antreibbaren Fahrzeugs, wobei bei dem Verfahren

- ein Nennwert der Stromtragfähigkeit des Ladekabels ermittelt wird,

- die Stromstärke des durch das Ladekabel fließenden Stroms unter Bildung eines Stromwerts gemessen wird,
- unter Nutzung des Nennwerts der Stromtragfähigkeit und des Stromwerts Erwartungswerte für die Temperatur des Ladekabels ermittelt werden,
- die Temperatur des Ladekabels unter Bildung von Temperaturwerten gemessen wird,
- die zeitliche Änderung der Temperaturwerte ermittelt wird,
- die zeitliche Änderung der Erwartungswerte ermittelt wird,
- eine Abweichung zwischen der zeitlichen Änderung der Temperaturwerte und der zeitlichen Änderung der Erwartungswerte ermittelt wird, und
- das Vorliegen des Fehlers erkannt wird, wenn die Abweichung einen vorbestimmten Grenzwert überschreitet.

Dabei wird vorteilhafterweise die Abweichung zwischen der zeitlichen Änderung der Temperaturwerte und der zeitlichen Änderung der Erwartungswerte ermittelt und mit dem Grenzwert verglichen. Dies erlaubt vorteilhafterweise auch bei sich ändernden Werten eine sichere Erkennung des Fehlers.

Das Verfahren kann so ausgestaltet sein, dass bei Vorliegen des Fehlers der durch das Ladekabel fließende Strom verringert oder abgeschaltet wird. Durch das Verringern oder Abschalten des durch das Ladekabel fließenden Stroms wird erreicht, dass die Temperatur des Ladekabels absinkt.

Das Verfahren kann auch so ausgestaltet sein, dass der Strom abgeschaltet wird mittels eines Schalters, eines Leitungsschutzschalters mit Arbeitsstromauslöser, eines Leitungsschutzschalters mit Fernantrieb oder eines Fehlerstromschutzschalters mit Fernantrieb. Hierbei ist besonders vorteilhaft, dass Leitungsschutzschalter und Fehlerstromschutzschalter als solches zuverlässige und geprüfte Schalter sind, so dass das Abschalten des Stromes mit derartigen Schaltern in zuverlässiger Art und Weise erfolgen kann.

Das Verfahren kann so ausgestaltet sein, dass der Nennwert der Stromtragfähigkeit des Ladekabels ermittelt wird, indem ein Widerstandswert ermittelt wird, der der Größe des elektrischen Widerstands zwischen zwei Kontakten des Ladekabels entspricht, wobei die Größe des elektrischen Widerstands die Stromtragfähigkeit des Ladekabels angibt. Mit anderen Worten gibt die Größe des elektrischen Widerstands zwischen den zwei Kontakten des Ladekabels die Stromtragfähigkeit des Ladekabels an. Die Stromtragfähigkeit des Ladekabels ist also mittels dieses Widerstandes codiert. Es kann beispielsweise ein Widerstandswert ermittelt werden, der der Größe des elektrischen Widerstands zwischen den Kontakten "Proximity" und "PE" eines gemäß der Norm IEC 62196 aufgebauten Steckers oder einer Buchse des Ladekabels entspricht.

Das Verfahren kann auch so ablaufen, dass die Temperatur des Ladekabels gemessen wird mittels eines Temperatursensors, der an einer elektrischen Schnittstelle angeordnet ist. An diese Schnittstelle sind beim Laden elektrische Kontakte des Ladekabels angeschlossen. Hierbei ist besonders vorteilhaft, dass der Temperatursensor an der elektrischen Schnittstelle für das Ladekabel angeordnet ist. Dabei erwärmt das Ladekabel die elektrische Schnittstelle und damit auch den Sensor. Somit kann der Temperatursensor der Schnittstelle die Temperatur des Ladekabels mit einer ausreichenden Genauigkeit messen.

Das Verfahren kann auch so ausgestaltet sein, dass die elektrische Schnittstelle angeordnet ist an einer Ladeeinrichtung zum Laden einer Fahrbatterie eines elektrisch antreibbaren Fahrzeugs. Dabei kann das Verfahren vorteilhafterweise in der Ladeeinrichtung ablaufen.

Bei dem Verfahren kann die elektrische Schnittstelle als eine Steckdose ausgestaltet sein. Derartige Steckdosen (auch als Ladesteckdosen oder Ladebuchsen bezeichnet) sind häufig an Ladeeinrichtungen angeordnet.

Bei dem Verfahren können die elektrischen Kontakte als Teile eines Steckers des Ladekabels ausgestaltet sein. Ein derartiger Stecker ist oft an einem Ladekabel angeordnet, um das Ladekabel mit einer Ladeeinrichtung zu verbinden.

Erfindungsgemäß angegeben wird weiterhin eine Ladeeinrichtung zum Laden einer Fahrbatterie eines elektrisch antreibbaren Fahrzeugs, welche ausgestaltet ist zum

- Ermitteln eines Nennwerts der Stromtragfähigkeit eines Ladekabels,
- Messen der Stromstärke des durch das Ladekabel fließenden Stroms (Ladestroms) unter Bildung eines Stromwerts,
- Ermitteln von mindestens einem Erwartungswert für die Temperatur des Ladekabels unter Nutzung des Nennwerts der Stromtragfähigkeit und des Stromwerts,
- Messen der Temperatur des Ladekabels unter Bildung von mindestens einem Temperaturwert,
- Vergleichen des mindestens einen Temperaturwerts mit dem mindestens einen Erwartungswert und
- Erkennen des Vorliegens eines Fehlers, wenn eine vorbestimmte Abweichung zwischen dem mindestens einen Temperaturwert und dem mindestens einen Erwartungswert auftritt.

Die Ladeeinrichtung kann so ausgestaltet sein, dass das Vergleichen der Temperaturwerte mit den Erwartungswerten umfasst:

- Ermitteln der zeitlichen Änderung der Temperaturwerte,
- Ermitteln der zeitlichen Änderung der Erwartungswerte, und
- Ermitteln einer Abweichung zwischen der zeitlichen Änderung der Temperaturwerte und der zeitlichen Änderung der Erwartungswerte.

Dabei erfolgt ein Erkennen des Vorliegens eines Fehlers, wenn die Abweichung einen vorbestimmten Grenzwert überschreitet.

Damit ergibt sich eine Ladeeinrichtung zum Laden einer Fahrbatterie eines elektrisch antreibbaren Fahrzeugs, welche ausgestaltet ist zum

- Ermitteln eines Nennwerts der Stromtragfähigkeit eines Ladekabels,
- Messen der Stromstärke des durch das Ladekabel fließenden Stroms unter Bildung eines Stromwerts,
- Ermitteln von Erwartungswerten für die Temperatur des Ladekabels unter Nutzung des Nennwerts der Stromtragfähigkeit und des Stromwerts,
- Messen der Temperatur des Ladekabels unter Bildung von Temperaturwerten,
- Ermitteln der zeitlichen Änderung der Temperaturwerte,
- Ermitteln der zeitlichen Änderung der Erwartungswerte,
- Ermitteln einer Abweichung zwischen der zeitlichen Änderung der Temperaturwerte und der zeitlichen Änderung der Erwartungswerte, und
- Erkennen des Vorliegens eines Fehlers, wenn die Abweichung einen vorbestimmten Grenzwert überschreitet.

Diese Ladeeinrichtung kann ausgestaltet sein zum Verringern oder Abschalten des durch das Ladekabel fließenden Stroms bei Vorliegen des Fehlers.

Die Ladeeinrichtung kann ausgestaltet sein zum Abschalten des Stroms mittels eines Schalters, eines Leitungsschutzschalters mit Arbeitsstromauslöser, eines Leitungsschutzschalters mit Fernantrieb oder eines Fehlerstromschutzschalters mit Fernantrieb.

Die Ladeeinrichtung kann auch ausgestaltet sein zum Ermitteln des Nennwerts der Stromtragfähigkeit des Ladekabels, indem die Ladeeinrichtung einen Widerstandswert ermittelt, der der Größe des elektrischen Widerstands zwischen zwei elektrischen Kontakten des Ladekabels entspricht, wobei die Größe des elektrischen Widerstands die Stromtragfähigkeit des Ladekabels angibt.

Die Ladeeinrichtung kann ausgestaltet sein zum Messen der Temperatur des Ladekabels mittels eines Temperatursensors, der an einer elektrischen Schnittstelle angeordnet ist, an die beim Laden elektrische Kontakte des Ladekabels angeschlossen sind.

Die Ladeeinrichtung kann so ausgestaltet sein, dass die elektrische Schnittstelle an der Ladeeinrichtung angeordnet ist.

Die Ladeeinrichtung kann so ausgestaltet sein, dass die elektrische Schnittstelle als eine Steckdose ausgestaltet ist.

Die Ladeeinrichtung kann auch so ausgestaltet sein, dass die elektrischen Kontakte als Teile eines Steckers des Ladekabels ausgestaltet sind.

Diese Ladeeinrichtung weist ebenfalls die Vorteile auf, die oben im Zusammenhang mit dem erfindungsgemäßen Verfahren angegeben sind.

Im Folgenden wird die Erfindung anhand eines Ausführungsbeispiels näher erläutert. Dazu sind in

Figur 1     ein Ausführungsbeispiel einer Ladeeinrichtung und eines Verfahrens zum Schutz des Ladekabels und in

Figur 2     ein Ausführungsbeispiel einer Steuereinrichtung der Ladeeinrichtung

dargestellt.

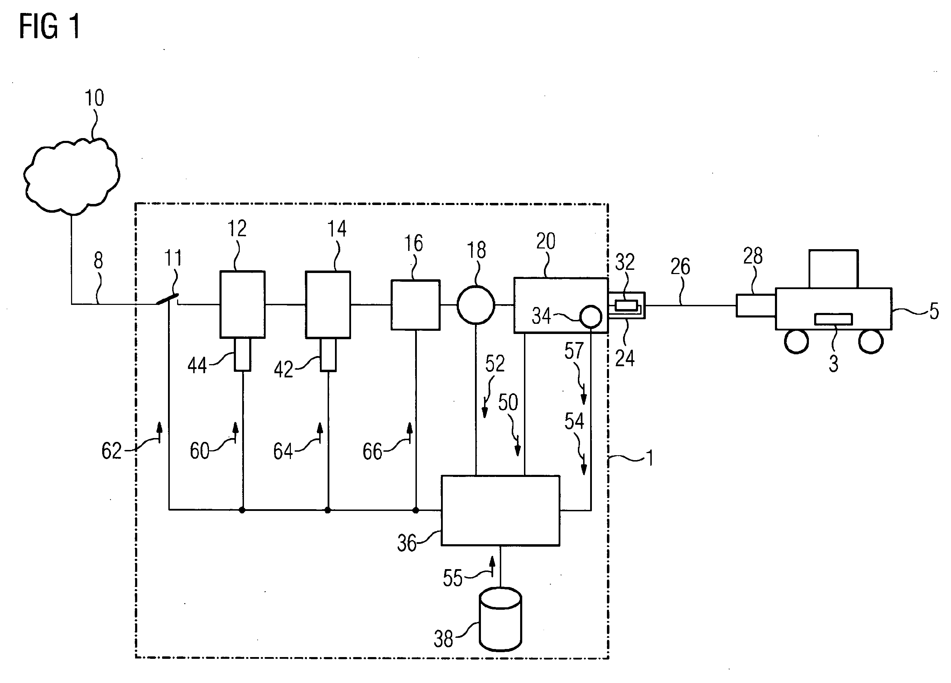

In Figur 1 ist eine Ladeeinrichtung 1 zum Laden einer Fahrbatterie 3 eines elektrisch antreibbaren Fahrzeugs 5 dargestellt. Diese Ladeeinrichtung 1 ist mittels eines Anschlusskabels 8 mit einem Energieversorgungsnetz 10 verbunden. Elektrischer Strom wird von dem Energieversorgungsnetz 10 über das Anschlusskabel 8, einen Schalter 11 (z.B. ein Schütz), einen Leitungsschutzschalter 12 und einen Fehlerstromschutzschalter 14 zu einer leistungselektronischen Baugruppe 16 der Ladeeinrichtung 1 geleitet. Die leistungselektronische Baugruppe 16 kann beispielsweise Leistungsdioden, Thyristoren und/oder IGBTs aufweisen, sie dient zur Beeinflussung des durch die Ladeeinrichtung fließenden Stroms (Ladestrom).

Von der leistungselektronischen Baugruppe 16 wird der elektrische Strom als Ladestrom weiter über eine Strommesseinrichtung 18 zu einer elektrischen Schnittstelle (Ladeschnittstelle) 20 der Ladeeinrichtung 1 geleitet. Diese Schnittstelle 20 ist im Ausführungsbeispiel als eine Steckdose 20 (Ladesteckdose, Ladebuchse) ausgestaltet. Die Strommesseinrichtung 18 kann beispielsweise als ein Stromwandler oder auch als ein Smartmeter mit Strommessfunktion ausgestaltet sein.

In die elektrische Schnittstelle 20 ist ein Stecker 24 (Ladestecker) eines Ladekabels 26 einsteckbar. Dieser Stecker 24 weist elektrische Kontakte des Ladekabels auf, die beim Laden mit der Ladeeinrichtung 1 elektrisch verbunden sind. Das Ladekabel 26 verbindet mittels einer Kupplung 28 (Ladekupplung) die Ladeeinrichtung 1 elektrisch mit dem elektrisch antreibbaren Fahrzeug 5. Der Ladestrom wird von der elektrischen Schnittstelle 20 über das Ladekabel 26 zu dem elektrisch antreibbaren Fahrzeug 5 geleitet, um dessen Fahrbatterie 3 aufzuladen.

Der Ladestecker 24 ist im Ausführungsbeispiel als ein sogenannter Typ-2-Stecker ausgestaltet, der entsprechend der Norm IEC 62196-2 aufgebaut ist. Dieser Stecker weist sieben elektrische Kontakte auf: vier Kontakte für die Übertragung von Dreiphasenwechselstrom, einen Kontakt "Pilot", einen Kontakt "Proximity" und einen Kontakt "PE" (Norm IEC 61851-1). Zwischen den Kontakten "Proximity" und "PE" ist im Inneren des Steckers 24 ein Widerstand 32 eingebaut. Mittels dieses Widerstands-Bauelements 32 ist gemäß der Norm IEC 61851-1 die Stromtragfähigkeit bzw. der Nennstrom des Ladekabels 26 codiert. (Die Kupplung 28 weist einen gleichartigen Widerstand auf.) Der Widerstand 32 wird auch als "Proximity-Widerstand" bezeichnet. Er gibt die maximale Stromtragfähigkeit des Ladekabels an. Dabei gilt folgende Zuordnung:

| Stromtragfähigkeit/ Nennstrom Ladekabel | Widerstandswert |
|---|---|
| 13 A | 1,5 k$\Omega$ |
| 20 A | 680 $\Omega$ |
| 32 A | 220 $\Omega$ |
| 63 A | 100 $\Omega$ |

Wenn der Stecker 24 in die Schnittstelle 20 eingesteckt wird, dann werden unter anderem der Kontakt "Proximity" und der Kontakt "PE" des Steckers 24 mit den zugehörigen Kontakten der Schnittstelle 20 elektrisch verbunden. Diese Kontakte der Schnittstelle 20 sind innerhalb der Ladeeinrichtung 1 elektrisch mit einer nicht explizit dargestellten Widerstands-Messeinrichtung verbunden, die den Widerstandswert des Widerstands 32 ermittelt.

An der Schnittstelle 20 ist nahe zu den elektrischen Kontakten des Steckers 24 (die die elektrischen Kontakte des Ladekabels darstellen) ein Temperatursensor 34 angeordnet. Dieser Temperatursensor 34 ist thermisch mit dem Ladestecker 24 gekoppelt. Der Temperatursensor 34 weist daher angenähert die Temperatur des Ladesteckers 24 auf. Mittels des Temperatursensors 34 kann also die Temperatur des Ladesteckers 24 und damit die Temperatur des Ladekabels gemessen werden. (In einem anderen Ausführungsbeispiel kann die Temperatur des Ladekabels aber auch anders gemessen werden, beispielsweise mittels eines im Ladekabel 26 angeordneten Temperatursensors oder mittels eines Infrarot-Thermometers.)

Eine Steuereinrichtung 36 der Ladeeinrichtung 1 ist im Ausführungsbeispiel als ein Mikrocontroller ausgestaltet. Diese Steuereinrichtung 36 ist mit einem Speicher 38 verbunden und kann Daten aus diesem Speicher auslesen und in diesen Speicher einschreiben. In dem Speicher 38 sind insbesondere Daten von verschiedenen Ladekabeln mit unterschiedlichen Stromtragfähigkeiten abgespeichert. So sind in dem Speicher beispielsweise Daten für ein 13A-Ladekabel, ein 20A-Ladekabel, ein 32A-Ladekabel und ein 63A-Ladekabel abgespeichert. Für jedes Ladekabel umfassen die Daten des Datenspeichers 38 eine Mehrzahl von Stromwerten und diesen Stromwerten jeweils zugehörige Erwartungswerte $\Theta$ für die Temperatur des Ladekabels. Diese Erwartungswerte $\Theta$ für die Temperatur des Ladekabels geben an, wie sich bei dem jeweiligen Stromwert des Ladestroms die Temperatur des Ladekabels mit der Zeit ändert. Diese Erwartungswerte geben also den erwarteten zeitlichen Verlauf der Temperatur des Ladekabels bei dem jeweiligen Stromwert des Ladestroms an. Der Speicher (Datenspeicher) kann beispielsweise als ein Flashspeicher, ROM, EPROM oder EEPROM ausgestaltet sein.

Die in dem Speicher 38 abgespeicherten Erwartungswerte für die Temperatur des Ladekabels wurden unter Nutzung des thermischen Modells des Ladekabels

$$\Theta \ = \ \Theta_{\texttt{Start}} \ + \ \Delta\Theta_{\texttt{max}} \ \left(1 - e^{\frac{-t}{\tau}}\right)$$

ermittelt.

Dabei wurden folgende Größen verwendet:

$\Theta$ ...        Erwartungswert der Temperatur des Ladekabels
$\Theta_{Start}$ ...        Anfangstemperatur des Ladekabels
$\Delta\Theta_{max}$ ...        maximaler Temperaturanstieg aufgrund des gemessenen Stroms
$\tau$ ...        thermische Zeitkonstante für die Erwärmung des Ladeka bels.

Dieses thermische Modell des Ladekabels ist eine Lösung einer Wärmedifferentialgleichung erster Ordnung. Mit Hilfe dieses thermischen Modells kann für beliebige Zeitpunkte t der Erwartungswert der Temperatur $\Theta$ des Ladekabels 26 berechnet werden. Dabei stellt t die Zeitspanne dar, die seit dem Einschalten des Ladestromes verstrichen ist.

Die Steuereinrichtung 36 ist über Signalleitungen mit der Schnittstelle 20, mit der Strommesseinrichtung 18, mit der leistungselektronischen Baugruppe 16, mit einem Fernantrieb 42 des Fehlerstromschutzschalters 14, mit einem Arbeitsstromauslöser 44 des Leitungsschutzschalters 12 und mit dem Schalter 11 verbunden. (Anstelle des Arbeitsstromauslösers 44 kann auch ein Fernantriebs für den Leitungsschutzschalter 12 eingesetzt werden.) Über diese Signalleitungen empfängt die Steuereinrichtung 36 Daten von diesen Einheiten und sendet Signale an diese Einheiten. Unter anderem kann die Steuereinrichtung 36 Stromwerte von der Strommesseinrichtung 18 empfangen und einen Widerstandswert des Widerstands 32 von der Schnittstelle 20 empfangen. Weiterhin kann die Steuereinrichtung 36 zum Beispiel den Leitungsschutzschalter 12 oder den Fehlerstromschutzschalter 14 ausschalten.

Ein Fernantrieb (auch Rücksteller genannt) ist eine Einrichtung, die mit einem Leitungsschutzschalter oder Fehlerstromschutzschalter mechanisch gekoppelt ist und die in der Lage ist, den Leitungsschutzschalter oder Fehlerstromschutzschalter sowohl einzuschalten als auch auszuschalten. Ein Arbeitsstromauslöser ist eine Einrichtung, die mit einem Leitungsschutzschalter mechanisch gekoppelt ist und die in der Lage ist, den Leitungsschutzschalter auszuschalten.

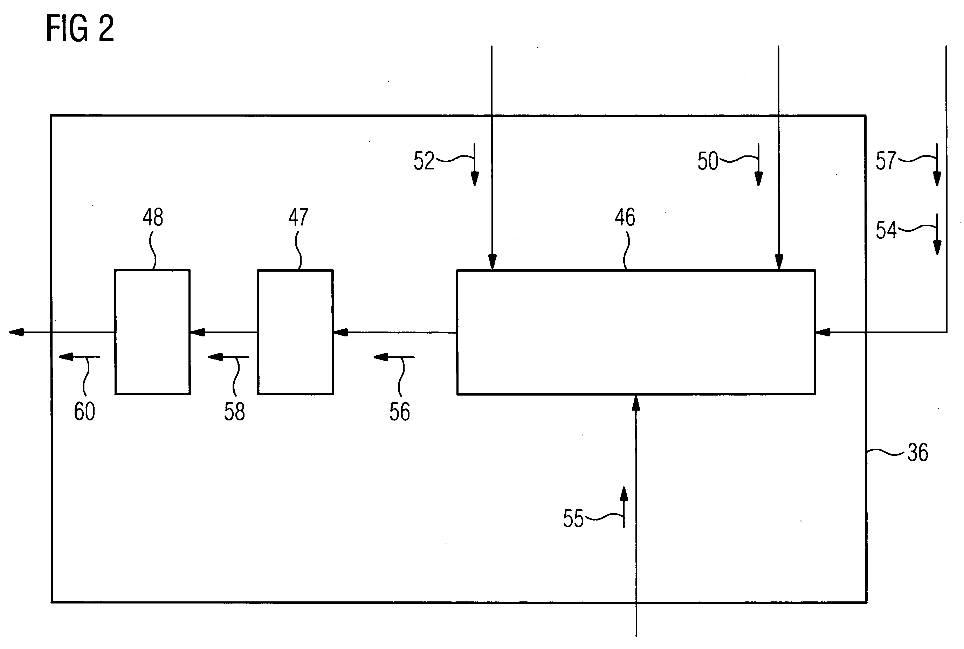

In Figur 2 ist die Steuereinrichtung 36 näher dargestellt. Die Steuereinrichtung 36 weist eine Recheneinheit 46 auf, die z.B. aus dem Speicher 38 abgefragte Erwartungswerte und die gemessenen Temperaturwerte verarbeitet. Die Ergebnisse dieser Verarbeitung werden zu einem Vergleicher 47 (Vergleichereinheit) übertragen, der eine Abweichung zwischen den Erwartungswerten und den Temperaturwerten ermittelt. Wenn diese Abweichung größer ist als eine vorbestimmte Abweichung (d.h. wenn diese Abweichung einen vorbestimmten Grenzwert (Schwellwert, maximale Abweichung) überschreitet), dann wird das Vorliegen eines Fehlers erkannt. Daraufhin weist der Vergleicher 47 eine Signalisiereinheit 48 an, ein Signal an eine Einheit der Ladeeinrichtung abzusenden, um den Ladestrom zu reduzieren oder abzuschalten.

Im Folgenden wird ein beispielhafter Verfahrensablauf beschrieben. Die Fahrbatterie 3 des elektrisch antreibbaren Fahrzeugs 5 soll im Ausführungsbeispiel mittels der Ladeeinrichtung 1 aufgeladen werden. Dazu wird das Fahrzeug 5 mittels des 20A-Ladekabels (20-Ampere-Ladekabel) 26 mit der Schnittstelle 20 elektrisch verbunden. Die Stromtragfähigkeit von 20A ist in dem Stecker 24 der Ladekabels 26 mittels des Widerstands 32 elektrisch kodiert. Bei einem ordnungsgemäßen 20A-Ladekabel weist der Widerstand 32 einen Widerstandswert von 680 Ohm auf. Im Ausführungsbeispiel ist jedoch der Widerstand 32 der Ladekabels defekt: dieser Widerstand 32 weist einen Wert von 220 Ohm auf.

Zu Beginn des Verfahrens ermittelt die Ladeeinrichtung 1 den Nennwert der Stromtragfähigkeit des Ladekabels 26. Dies erfolgt, indem die Steuereinrichtung 36 den Widerstandswert des Widerstands 32 ermittelt. Der Widerstandswert des Widerstands 32 wird mittels der nicht explizit dargestellten Widerstands-Messeinrichtung gemessen und mittels einer Nachricht 50 zu der Steuereinrichtung 36 übermittelt. Im Ausführungsbeispiel beträgt dieser Widerstandswert (infolge des Defektes des Ladekabels) 220 Ohm. Daraus ermittelt die Steuereinrichtung 36, dass das Ladekabel (anscheinend) eine Stromtragfähigkeit von 32A aufweist. In Wirklichkeit sind jedoch die Leiter des Ladekabels 26 nur für einen Strom der Stromstärke 20A dimensioniert.

Weiterhin misst der Temperatursensor 34 die aktuelle Temperatur des Ladesteckers 24 und damit die Temperatur des Ladekabels 26 und sendet einen Temperaturwert 54 an die Steuereinrichtung 36. Dieser Temperaturwert 54 stellt die Anfangstemperatur des Ladekabels 26 dar und wird hier mit $\Theta_{Start}$ bezeichnet. Im Beispiel beträgt die Anfangstemperatur 23°C ($\Theta_{Start}$ = 23°C).

Daraufhin schaltet die Ladeeinrichtung 1 (entsprechend des ermittelten Nennwerts für die Stromtragfähigkeit) einen Ladestrom mit der Stromstärke 32A ein und leitet diesen Ladestrom durch das Ladekabel 26. Die Strommesseinrichtung 18 misst die Stromstärke des Ladestroms und sendet einen Stromwert 52 (I = 32A) an die Steuereinrichtung 36.

Daraufhin liest die Steuereinrichtung 36 Daten für das Ladekabel mit dem ermittelten Nennwert der Stromtragfähigkeit (die mittels des Widerstandswertes 54 ermittelt wurde) aus dem Speicher 38 aus. Mit anderen Worten werden aus dem Speicher 38 Daten des Ladekabels, das eine Stromtragfähigkeit entsprechend dem Nennwert aufweist, ausgelesen. Hier werden also die Erwartungswerte für die Temperatur des 32A-Ladekabels bei der Stromstärke 32A und der Anfangstemperatur 23°C aus dem Speicher 38 ausgelesen und mittels einer Nachricht 55 zu der Recheneinheit 46 übertragen.

Mittels des Temperatursensors 34 wird wiederholt (z.B. in periodischen Zeitabständen) die aktuelle Temperatur des Ladekabels 26 gemessen. Die gemessenen Temperaturwerte 57 werden zu der Recheneinheit 46 übertragen. Die Recheneinheit 46 berechnet die zeitliche Änderung der Erwartungswerte während einer bestimmten Zeitspanne (zum Beispiel für die ersten 2 Minuten nach Einschalten des Ladestroms). Weiterhin berechnet die Recheneinheit 46 die zeitliche Änderung der Temperaturwerte während dieser Zeitspanne. Die berechneten Werte für die zeitliche Änderung der Erwartungswerte und die zeitliche Änderung der Temperaturwerte werden von der Recheneinheit 46 zu dem Vergleicher 47 übertragen (Nachricht 56).

Daraufhin ermittelt der Vergleicher 47 die Abweichung zwischen der zeitlichen Änderung der Temperaturwerte und der zeitlichen Änderung der Erwartungswerte. Diese Abweichung wird mit einem vorbestimmten Grenzwert verglichen. Wenn die Abweichung größer ist als der vorbestimmte Grenzwert, dann erkennt der Vergleicher 47 der Steuereinrichtung 36, dass ein Fehler vorliegt.

Im Ausführungsbeispiel beträgt die zeitliche Änderung der Erwartungswerte innerhalb der Zeitspanne von 2 Minuten 0,1 Grad Celsius pro Sekunde. Die zeitliche Änderung der gemessenen Temperaturwerte innerhalb der Zeitspanne von 2 Minuten beträgt 0,2 Grad Celsius pro Sekunde. Der vorbestimmte Grenzwert (Schwellwert) beträgt 0,05 Grad Celsius pro Sekunde. Dieser Grenzwert stellt eine vorbestimmte Abweichung zwischen den Temperaturwerten und den Erwartungswerten dar. Bei Auftreten einer solchen vorbestimmten Abweichung wird das Vorliegen eines Fehlers erkannt.

Der Vergleicher 47 ermittelt, dass die Abweichung zwischen der zeitlichen Änderung der Temperaturwerte und der zeitlichen Änderung der Erwartungswerte 0,1 Grad Celsius pro Sekunde beträgt (0,2°C/s - 0,1°C/s = 0,1°C/s). Da diese Abweichung größer ist als der Grenzwert (0,05°C/s), erkennt der Vergleicher 47, dass ein Fehler vorliegt und sendet eine Fehlernachricht 58 an die Signalisiereinheit 48. Daraufhin sendet die Signalisiereinheit 48 ein Abschaltsignal 60 an den Arbeitsstromauslöser 44 des Leitungsschutzschalters 12 und schaltet damit den Leitungsschutzschalter 12 ab. Dadurch wird der durch das Ladekabel fließende Ladestrom abgeschaltet und das Ladekabel kühlt wieder ab. Somit wird eine Beschädigung des Ladekabels 26 oder eine Beeinträchtigung von sich in der Nähe des Ladekabels aufhaltenden Personen sicher vermieden.

Alternativ kann die Signalisiereinheit 48 auch ein Abschaltsignal 62 an den Schalter 11 senden, um den Schalter 11 abzuschalten. Als eine weitere Alternative kann die Signalisiereinheit 48 auch ein Abschaltsignal 64 an den Fernantrieb 42 des Fehlerstromschutzschalters 14 senden, um den Fehlerstromschutzschalter 14 abzuschalten. Eine weitere Alternative im Fehlerfall besteht darin, dass die Signalisiereinheit 48 ein Signal 66 an die leistungselektronische Baugruppe 16 sendet, um den Ladestrom zu verringern. Auch diese alternativen Maßnahmen haben ein Wiederabkühlen des Ladekabels 26 zur Folge. Der Fehler kann einem Nutzer der Ladeeinrichtung angezeigt werden, so dass dieser zum Beispiel das defekte Ladekabel austauschen kann.

Wenn in einem anderen Ausführungsbeispiel der Widerstand 32 einen korrekten Widerstandswert aufweist, dafür aber die Strommesseinrichtung 18 defekt ist und daher ein falscher Stromwert an die Steuereinrichtung 36 übertragen wird, dann wird ebenfalls eine Abweichung zwischen der zeitlichen Änderung der Temperaturwerte und der zeitlichen Änderung der Erwartungswerte auftreten. Sofern der Stromwert 52 stark vom tatsächlichen Stromwert abweicht, wird auch diese Abweichung den Grenzwert überschreiten und damit wird ein Fehler erkannt werden.

Ähnlich läuft das Verfahren auch dann ab, wenn in einem weiteren Ausführungsbeispiel sowohl der Widerstand 32 als auch die Strommesseinrichtung 18 ordnungsgemäß arbeiten, jedoch der Temperatursensor 34 defekt ist. Dann werden falsche Temperaturwerte 54 und 57 an die Steuereinrichtung 36 übertragen werden. Daher wird eine Abweichung zwischen der zeitlichen Änderung der Temperaturwerte und der zeitlichen Änderung der Erwartungswerte auftreten, und bei einer ausreichend großen Abweichung wird das Vorliegen eines Fehlers erkannt werden.

Somit weist das Verfahren den großen Vorteil auf, dass auch bei Auftreten von sogenannten Einzelfehlern (zum Beispiel beim Auftreten eines defekten Widerstands, einer defekten Strommesseinrichtung oder eines defekten Temperatursensors) zuverlässig erkannt wird, dass ein Fehler vorliegt. Daher kann entsprechend reagiert werden, z. B. kann der Strom abgeschaltet bzw. reduziert werden.

In einem weiteren Ausführungsbeispiel kann das Verfahren auch so ablaufen, dass ein aktueller Temperaturwert (oder mehrere Temperaturwerte) mit einem Erwartungswert (oder mit mehreren Erwartungswerten) verglichen wird und bei Auftreten einer vorbestimmten Abweichung zwischen dem Temperaturwert und dem Erwartungswert das Vorliegen eines Fehlers erkannt wird. Zum Beispiel beträgt die vorbestimmte Abweichung 3°C, der Erwartungswert 33°C und der Temperaturwert 38°C. Die Abweichung (Differenz) zwischen dem Temperaturwert und dem Erwartungswert beträgt dann 5°C (38°C - 33°C = 5°C) und ist damit größer als die vorbestimmte Abweichung (3°C). Daher wird das Vorliegen eines Fehlers erkannt. Daraufhin sendet der Vergleicher 47 die Fehlernachricht 58 an die Signalisiereinheit 48, welche dann das Abschaltsignal 60 aussendet.

Vorstehend wurden das Verfahren und die Ladeeinrichtung am Beispiel des sogenannten Typ-2-Steckers und der zugehörigen Steckdose beschrieben. In anderen Ausführungsbeispielen können aber auch andere Stecker und Steckdosen verwendet werden, zum Beispiel Schutzkontaktstecker und zugehörige, mit einem Temperatursensor ausgestattete Schutzkontaktsteckdosen.

Mittels des beschriebenen Verfahrens und der beschriebenen Ladeeinrichtung kann zuverlässig verhindert werden, dass Ladekabel bei der Aufladung von Fahrbatterien mit zu großen Ladeströmen überlastet werden. Solche Stromüberlastungen können das Ladekabel zerstören bzw. handelnde Personen gefährden. Zum Beispiel kann ein für 13A ausgelegtes Ladekabel bei einem Fehler des Codierwiderstands 32 anstelle von 13A mit einem Ladestrom von 63A durchflossen werden. Dabei entsteht im Ladekabel ungefähr die 25-fache Verlustleistung (verglichen mit dem Ladestrom 13A). Diese Verlustleistung bewirkt eine starke Erwärmung des Kabels, so dass mit gesundheitsgefährdenden Temperaturen an der Kabeloberfläche zu rechnen ist. Derartige Temperaturen werden mittels des beschriebenen Verfahrens und der Ladeeinrichtung zuverlässig verhindert.

Bei Nutzung des Verfahrens bzw. der Ladeeinrichtung kann mittels drei unabhängiger Messungen (Messung des Ladestroms, Messung des Nennwerts der Stromtragfähigkeit des Ladekabels sowie Temperaturmessung am Ladekabel) der Fehler innerhalb kurzer Zeit erkannt werden und der Ladestrom entsprechend beeinflusst werden (z. B. Verringerung des Ladestrom oder Ausschalten des Ladestroms). Somit wird das Ladekabel sicher und zuverlässig vor zu starker Erwärmung geschützt.

## Patentansprüche

1. Verfahren zum Schutz eines Ladekabels (26) zum Laden einer Fahrbatterie (3) eines elektrisch antreibbaren Fahrzeugs (5), wobei bei dem Verfahren

   - ein Nennwert der Stromtragfähigkeit des Ladekabels (26) ermittelt wird (50),
   - die Stromstärke des durch das Ladekabel (26) fließenden Stroms unter Bildung eines Stromwerts (52) gemessen wird,
   - unter Nutzung des Nennwerts der Stromtragfähigkeit und des Stromwerts mindestens ein Erwartungswert (55) für die Temperatur des Ladekabels ermittelt wird,
   - die Temperatur des Ladekabels (26) unter Bildung mindestens eines Temperaturwerts (57) gemessen wird,
   - der mindestens eine Temperaturwert mit dem mindestens einen Erwartungswert verglichen (47) wird und
   - bei Auftreten einer vorbestimmten Abweichung zwischen dem mindestens einen Temperaturwert und dem mindestens einen Erwartungswert das Vorliegen eines Fehlers (58) erkannt wird.

2. Verfahren nach Anspruch 1,
   **dadurch gekennzeichnet, dass**

   - die Temperaturwerte mit den Erwartungswerten verglichen (47) werden, indem

     - die zeitliche Änderung der Temperaturwerte ermittelt wird,
     - die zeitliche Änderung der Erwartungswerte ermittelt wird, und
     - eine Abweichung zwischen der zeitlichen Änderung der Temperaturwerte und der zeitlichen Änderung der Erwartungswerte ermittelt wird (47), und

   - das Vorliegen des Fehlers (58) erkannt wird, wenn die Abweichung einen vorbestimmten Grenzwert überschreitet.

3. Verfahren nach Anspruch 1 oder 2,
   **dadurch gekennzeichnet, dass**

   - bei Vorliegen des Fehlers der durch das Ladekabel fließende Strom verringert (66) oder abgeschaltet (60, 62, 64) wird.

4. Verfahren nach einem der vorhergehenden Ansprüche,
   **dadurch gekennzeichnet, dass**

   - der Strom abgeschaltet wird mittels eines Schalters (11), eines Leitungsschutzschalters (12) mit Arbeitsstromauslöser (44), eines Leitungsschutzschalters mit Fernantrieb oder eines Fehlerstromschutzschalters (14) mit Fernantrieb (42).

5. Verfahren nach einem der vorhergehenden Ansprüche,
   **dadurch gekennzeichnet, dass**

   - der Nennwert der Stromtragfähigkeit des Ladekabels ermittelt wird, indem ein Widerstandswert (50) ermittelt wird, der der Größe des elektrischen Widerstands (32) zwischen zwei Kontakten des Ladekabels (26) entspricht, wobei die Größe des elektrischen Widerstands (32) die Stromtragfähigkeit des Ladekabels (26) angibt.

6.  Verfahren nach einem der vorhergehenden Ansprüche,
    **dadurch gekennzeichnet, dass**

    - die Temperatur des Ladekabels gemessen wird mittels eines Temperatursensors (34), der an einer elektrischen Schnittstelle (20) angeordnet ist, an die beim Laden elektrische Kontakte des Ladekabels (26) angeschlossen sind.

7.  Verfahren nach Anspruch 6,
    **dadurch gekennzeichnet, dass**

    - die elektrische Schnittstelle (20) angeordnet ist an einer Ladeeinrichtung (1) zum Laden einer Fahrbatterie (3) eines elektrisch antreibbaren Fahrzeugs (5).

8.  Verfahren nach Anspruch 6 oder 7,
    **dadurch gekennzeichnet, dass**

    - die elektrische Schnittstelle als eine Steckdose (20) ausgestaltet ist.

9.  Verfahren nach einem der Ansprüche 6 bis 8,
    **dadurch gekennzeichnet, dass**

    - die elektrischen Kontakte als Teile eines Steckers (24) des Ladekabels (26) ausgestaltet sind.

10. Ladeeinrichtung (1) zum Laden einer Fahrbatterie (3) eines elektrisch antreibbaren Fahrzeugs (5), welche ausgestaltet ist zum

    - Ermitteln eines Nennwerts (50) der Stromtragfähigkeit eines Ladekabels,
    - Messen (18) der Stromstärke des durch das Ladekabel (26) fließenden Stroms unter Bildung eines Stromwerts (52),
    - Ermitteln mindestens eines Erwartungswerts (55) für die Temperatur des Ladekabels unter Nutzung des Nennwerts der Stromtragfähigkeit und des Stromwerts,
    - Messen der Temperatur des Ladekabels (26) unter Bildung mindestens eines Temperaturwerts (57),
    - Vergleichen (47) des mindestens einen Temperaturwerts mit dem mindestens einen Erwartungswert und
    - Erkennen des Vorliegens eines Fehlers (58), wenn eine vorbestimmte Abweichung zwischen dem mindestens einen Temperaturwert und dem mindestens einen Erwartungswert auftritt.

11. Ladeeinrichtung nach Anspruch 10,
    **dadurch gekennzeichnet, dass**

    - das Vergleichen (47) der Temperaturwerte mit den Erwartungswerten umfasst:

      - Ermitteln der zeitlichen Änderung der Temperaturwerte,
      - Ermitteln der zeitlichen Änderung der Erwartungswerte, und
      - Ermitteln einer Abweichung (47) zwischen der zeitlichen Änderung der Temperaturwerte und der zeitlichen Änderung der Erwartungswerte, und

    - Erkennen des Vorliegens eines Fehlers (58), wenn die Abweichung einen vorbestimmten Grenzwert überschreitet.

12. Ladeeinrichtung nach Anspruch 10 oder 11,
    **dadurch gekennzeichnet, dass**

    - diese ausgestaltet ist zum Verringern (66) oder Abschalten (60, 62, 64) des durch das Ladekabel (26) fließenden Stroms bei Vorliegen des Fehlers.

13. Ladeeinrichtung nach einem der Ansprüche 10 bis 12,

**dadurch gekennzeichnet, dass**

- diese ausgestaltet ist zum Abschalten des Stroms mittels eines Schalters (11), eines Leitungsschutzschalters (12) mit Arbeitsstromauslöser (44), eines Leitungsschutzschalters mit Fernantrieb oder eines Fehlerstromschutzschalters (14) mit Fernantrieb (42).

14. Ladeeinrichtung nach einem der Ansprüche 10 bis 13,
**dadurch gekennzeichnet, dass**

- diese ausgestaltet ist zum Ermitteln des Nennwerts der Stromtragfähigkeit des Ladekabels, indem die Ladeeinrichtung einen Widerstandswert (50) ermittelt, der der Größe des elektrischen Widerstands (32) zwischen zwei elektrischen Kontakten des Ladekabels (26) entspricht, wobei die Größe des elektrischen Widerstands (32) die Stromtragfähigkeit des Ladekabels (26) angibt.

15. Ladeeinrichtung nach einem der Ansprüche 10 bis 14,
**dadurch gekennzeichnet, dass**

- diese ausgestaltet ist zum Messen der Temperatur des Ladekabels mittels eines Temperatursensors (34), der an einer elektrischen Schnittstelle (20) angeordnet ist, an die beim Laden elektrische Kontakte des Ladekabels (26) angeschlossen sind.

16. Ladeeinrichtung nach Anspruch 15,
**dadurch gekennzeichnet, dass**

- die elektrische Schnittstelle (20) an der Ladeeinrichtung (1) angeordnet ist.

17. Ladeeinrichtung nach Anspruch 15 oder 16,
**dadurch gekennzeichnet, dass**

- die elektrische Schnittstelle als eine Steckdose (20) ausgestaltet ist.

18. Ladeeinrichtung nach einem der Ansprüche 15 bis 17,
**dadurch gekennzeichnet, dass**

- die elektrischen Kontakte als Teile eines Steckers (24) des Ladekabels (26) ausgestaltet sind.

**Claims**

1. Method for protecting a charging cable (26) for charging a traction battery (3) of an electrically driveable vehicle (5), wherein in the method

- a rated value of the current-carrying capacity of the charging cable (26) is determined (50),
- the strength of the current flowing through the charging cable (26) is measured by forming a current value (52),
- at least one anticipated value (55) for the temperature of the charging cable is determined by using the rated value of the current-carrying capacity and of the current value,
- the temperature of the charging cable (26) is measured by forming at least one temperature value (57),
- the at least one temperature value is compared (47) with the at least one anticipated value, and
- when a predetermined difference occurs between the at least one temperature value and the at least one anticipated value, the presence of a fault (58) is detected.

2. Method according to Claim 1,
**characterized in that**

- the temperature values are compared (47) with the anticipated values, **in that**

- the change in the temperature values over time is determined,
- the change in the anticipated values over time is determined, and

- a difference between the change over time of the temperature values and the change over time of the anticipated values is determined (47), and
- the presence of the fault (58) is detected if the difference exceeds a predetermined limiting value.

3. Method according to Claim 1 or 2,
   **characterized in that**

   - when the fault is present, the current flowing through the charging cable is reduced (66) or switched off (60, 62, 64).

4. Method according to one of the preceding claims,
   **characterized in that**

   - the current is switched off by means of a switch (11), a circuit breaker (12) with a shunt release (44), a circuit breaker with a remote operator or fault current circuit breaker (14) with a remote operator (42).

5. Method according to one of the preceding claims,
   **characterized in that**

   - the rated value of the current-carrying capacity of the charging cable is determined by determining a resistance value (50) which corresponds to the magnitude of the electrical resistance (32) between two contacts of the charging cable (26), wherein the magnitude of the electrical resistance (32) indicates the current-carrying capacity of the charging cable (26).

6. Method according to one of the preceding claims,
   **characterized in that**

   - the temperature of the charging cable is measured by means of a temperature sensor (34) which is arranged at an electrical interface (20) to which electrical contacts of the charging cable (26) are connected during the charging.

7. Method according to Claim 6,
   **characterized in that**

   - the electrical interface (20) is arranged on a charging device (1) for charging a traction battery (3) of an electrically driveable vehicle (5).

8. Method according to Claim 6 or 7,
   **characterized in that**

   - the electrical interface is configured as a socket (20).

9. Method according to one of Claims 6 to 8,
   **characterized in that**

   - the electrical contacts are configured as parts of a plug (24) of the charging cable (26).

10. Charing device (1) for charging a traction battery (3) of an electrically driveable vehicle (5), which charging device (1) is configured to

    - determine a rated value (50) of the current-carrying capacity of a charging cable,
    - measure (18) the strength of the current flowing through the charging cable (26) for forming a current value (52),
    - determine at least one anticipated value (55) for the temperature of the charging cable by using the rated value of the current-carrying capacity and of the current value,
    - measure the temperature of the charging cable (26) by forming at least one temperature value (57),
    - comparing (47) the at least one temperature value with the at least one anticipated value, and
    - detecting the presence of a fault (58) if a predetermined difference occurs between the at least one temperature value and the at least one anticipated value.

**11.** Charging device according to Claim 10,
**characterized in that**

- the comparison (47) of the temperature values with the anticipated values comprises:

- determining the change over time of the temperature values,
- determining the change over time of the anticipated values,
and
- determining a difference (47) between the change over time of the temperature values and the change over time of the anticipated values, and

- detecting the presence of a fault (58) if the difference exceeds a predetermined limiting value.

**12.** Charging device according to Claim 10 or 11,
**characterized in that**

- said charging device is configured to reduce (66) or switch off (60, 62, 64) the current flowing through the charging cable (26), when the fault is present.

**13.** Charging device according to one of Claims 10 to 12,
**characterized in that**

- said charging device is configured to switch off the current by means of a switch (11), a circuit breaker (12) with a shunt release (44), a circuit breaker with a remote operator or a fault-current circuit breaker (14) with a remote operator (42).

**14.** Charging device according to one of Claims 10 to 13,
**characterized in that**

- said charging device is configured to determine the rated value of the current-carrying capacity of the charging cable **in that** the charging device determines a resistance value (50) which corresponds to the magnitude of the electrical resistance (32) between two electrical contacts of the charging cable (26), wherein the magnitude of the electrical resistance (32) indicates the current-carrying capacity of the charging cable (26).

**15.** Charging device according to one of Claims 10 to 14,
**characterized in that**

- said charging device is configured to measure the temperature of the charging cable by means of a temperature sensor (34) which is arranged at an electrical interface (20) to which electrical contacts of the charging cable (26) are connected during charging.

**16.** Charging device according to Claim 15,
**characterized in that**

- the electrical interface (20) is arranged at the charging device (1).

**17.** Charging device according to Claim 15 or 16,
**characterized in that**

- the electrical interface is configured as a socket (20).

**18.** Charging device according to one of Claims 15 to 17,
**characterized in that**

- the electrical contacts are configured as parts of a plug (24) of the charging cable (26).

**Revendications**

1.  Procédé de protection d'un câble de charge (26) pour charger une batterie de roulage (3) d'un véhicule à propulsion électrique (5), procédé dans lequel

    - on détermine (50) une valeur nominale de la capacité de transport de courant du câble de charge (26),
    - on mesure l'ampérage du courant circulant à travers le câble de charge (26) avec formation d'une valeur de courant (52),
    - en utilisant la valeur nominale de la capacité de transport de courant et la valeur de courant, on détermine au moins une valeur attendue (55) pour la température du câble de charge,
    - on mesure la température du câble de charge (26) avec formation d'au moins une valeur de température (57),
    - on compare (47) ladite au moins une valeur de température avec ladite au moins une valeur attendue, et
    - lorsqu'il apparaît un écart prédéterminé entre ladite au moins une valeur de température et ladite au moins une valeur attendue, on identifie l'existence d'un défaut (58).

2.  Procédé selon la revendication 1, **caractérisé en ce que**

    - on compare (47) les valeurs de température avec les valeurs attendues, par le fait que

        - on détermine la variation temporelle des valeurs de température,
        - on détermine la variation temporelle des valeurs attendues, et
        - on détermine (47) un écart entre la variation temporelle des valeurs de température et la variation temporelle des valeurs attendues, et

    - on identifie l'existence du défaut (58), lorsque l'écart dépasse une valeur limite prédéterminée.

3.  Procédé selon la revendication 1 ou 2, **caractérisé en ce que**

    - en cas d'existence du défaut, on réduit (66) ou on coupe (60, 62, 64) le courant circulant à travers le câble de charge.

4.  Procédé selon l'une quelconque des revendications précédentes, **caractérisé en ce que**

    - on coupe le courant au moyen d'un interrupteur (11), d'un disjoncteur de protection de ligne (12) avec une bobine de déclenchement à émission (44), d'un disjoncteur de protection de ligne avec télécommande ou d'un disjoncteur de courant de défaut (14) avec télécommande (42).

5.  Procédé selon l'une quelconque des revendications précédentes, **caractérisé en ce que**

    - on détermine la valeur nominale de la capacité de transport de courant du câble de charge, par le fait que l'on détermine une valeur de résistance (50), qui correspond à la grandeur de la résistance électrique (32) entre deux contacts du câble de charge (26), dans lequel la grandeur de la résistance électrique (32) indique la capacité de transport de courant du câble de charge (26).

6.  Procédé selon l'une quelconque des revendications précédentes, **caractérisé en ce que**

    - on mesure la température du câble de charge au moyen d'un capteur de température (34), qui est disposé à une interface électrique (20) à laquelle des contacts électriques du câble de charge (26) sont raccordés lors de la charge.

7.  Procédé selon la revendication 6, **caractérisé en ce que**

    - l'interface électrique (20) est disposée sur un dispositif de charge (1) pour charger une batterie de roulage (3) d'un véhicule à propulsion électrique (5).

8.  Procédé selon la revendication 6 ou 7, **caractérisé en ce que**

    - l'interface électrique est constituée par une prise de courant (20).

**9.** Procédé selon l'une quelconque des revendications 6 à 8, **caractérisé en ce que**

- les contacts électriques sont configurés comme parties d'un connecteur (24) du câble de charge (26).

**10.** Dispositif de charge (1) pour charger une batterie de roulage (3) d'un véhicule à propulsion électrique (5), qui est configuré pour

- déterminer une valeur nominale (50) de la capacité de transport de courant d'un câble de charge,
- mesurer (18) l'ampérage du courant circulant à travers le câble de charge (26) avec formation d'une valeur de courant (52),
- déterminer au moins une valeur attendue (55) pour la température du câble de charge en utilisant la valeur nominale de la capacité de transport de courant et la valeur de courant,
- mesurer la température du câble de charge (26) avec formation d'au moins une valeur de température (57),
- comparer (47) ladite au moins une valeur de température avec ladite au moins une valeur attendue, et
- identifier l'existence d'un défaut (58), lorsqu'il se produit un écart prédéterminé entre ladite au moins une valeur de température et ladite au moins une valeur attendue.

**11.** Dispositif de charge selon la revendication 10, **caractérisé en ce que**

- la comparaison (47) des valeurs de température avec les valeurs attendues comprend:

 - déterminer la variation temporelle des valeurs de température,
 - déterminer la variation temporelle des valeurs attendues,
 - déterminer un écart (47) entre la variation temporelle des valeurs de température et la variation temporelle des valeurs attendues, et

- l'identification de l'existence d'un défaut (58), lorsque l'écart dépasse une valeur limite prédéterminée.

**12.** Dispositif de charge selon la revendication 10 ou 11, **caractérisé en ce que**

- celui-ci est configuré pour réduire (66) ou couper (60, 62, 64) le courant circulant à travers le câble de charge (26) en cas d'existence du défaut.

**13.** Dispositif de charge selon l'une quelconque des revendications 10 à 12, **caractérisé en ce que**

- celui-ci est configuré pour couper le courant au moyen d'un interrupteur (11), d'un disjoncteur de protection de ligne (12) avec une bobine de déclenchement à émission (44), d'un disjoncteur de protection de ligne avec télécommande ou d'un disjoncteur de courant de défaut (14) avec télécommande (42).

**14.** Dispositif de charge selon l'une quelconque des revendications 10 à 13, **caractérisé en ce que**

- celui-ci est configuré pour déterminer la valeur nominale de la capacité de transport de courant du câble de charge, par le fait que le dispositif de charge détermine une valeur de résistance (50), qui correspond à la grandeur de la résistance électrique (32) entre deux contacts électriques du câble de charge (26), dans lequel la grandeur de la résistance électrique (32) indique la capacité de transport de courant du câble de charge (26).

**15.** Dispositif de charge selon l'une quelconque des revendications 10 à 14, **caractérisé en ce que**

- celui-ci est configuré pour mesurer la température du câble de charge au moyen d'un capteur de température (34), qui est disposé à une interface électrique (20), à laquelle des contacts électriques du câble de charge (26) sont raccordés lors de la charge.

**16.** Dispositif de charge selon la revendication 15, **caractérisé en ce que**

- l'interface électrique (20) est disposée sur le dispositif de charge (1).

**17.** Dispositif de charge selon la revendication 15 ou 16, **caractérisé en ce que**

- l'interface électrique est constituée par une prise de courant (20).

**18.** Dispositif de charge selon l'une quelconque des revendications 15 à 17, **caractérisé en ce que**

- les contacts électriques sont configurés en parties d'un connecteur (24) du câble de charge (26).

# FIG 1

EP 2 847 023 B1

# FIG 2

EP 2 847 023 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010043291